# EUROPÄISCHE PATENTANMELDUNG

(11) **EP 1 464 261 A1**
(43) Veröffentlichungstag der Anmeldung: **06.10.2004**
(21) Anmeldenummer: 03007755.6
(22) Anmeldetag: 04.04.2003
(51) Int. Cl.: A47J 17/02, A47J 25/00

(54) **Vorrichtung zum Schälen und Entkernen von Äpfeln**

(71) Anmelder: Jehle & Batliner Production AG, 9495 Triesen (CH)
(72) Erfinder: Batliner, Andreas, 9495 Triesen (Fürstentum Liechtenstein) (LI); Goos, Herbert, 8914 Aeugst a. Albis (CH)
(74) Vertreter: Rigling, Peter Daniel

(57) **Zusammenfassung**

Es ist eine Vorrichtung mit einem Handgriff (1a, 1b) und mit mindestens einem länglichen U-förmigen Ausstechelement (2a, 2b), das am einen stirnseitigen Ende mit dem Handgriff (1a, 1b) verbunden ist bzw. in diesen übergeht, beschrieben. Das mindestens eine Ausstechelement (2a, 2b) weist am anderen stirnseitigen Ende eine im Wesentlichen in axialer Richtung des Ausstechelementes (2a, 2b) wirkende Schneidevorrichtung (3a, 3b) auf. Die Erfindung zeichnet sich dadurch aus, dass das mindestens eine U-förmige Ausstechelement (2a, 2b) mindestens eine Schnittkante (4a, 4b, 11a, 11b) aufweist, welche im Wesentlichen axial in Bezug auf das Ausstechelement (2a, 2b) verläuft.

## Beschreibung

Die vorliegende Erfindung betrifft eine Vorrichtung nach dem Oberbegriff von Patentanspruch 1 sowie eine Verwendung der Vorrichtung.

Vorrichtungen zum Entfernen von Apfelkernen oder dergleichen sind seit langer Zeit bekannt und bestehen im Wesentlichen aus einem Handgriff und einem zylinderförmigen Abschnitt mit einer Schnittkante am in Bezug auf den Handgriff abgewandten Ende. Stellvertretend für verschiedene Ausführungsvarianten von bekannten Apfelentkernern wird auf die folgenden Druckschriften verwiesen: US-1 371 948, US-1 639 523, US-1 530 822, US-6 032 368 und US-4 596 073.

Diese bekannten Vorrichtungen zeichnen sich allesamt dadurch aus, dass sie sich lediglich zum Entkernen eignen.

Des Weiteren sind Vorrichtungen zum Schälen von Äpfeln oder dergleichen unter den Begriffen "Schäler" oder "Schälmesser" bekannt. Derartige Vorrichtungen lassen sich nicht für andere Arbeitsvorgänge verwenden.

Schliesslich ist aus DE-35 24 070 eine Vorrichtung bekannt, die sich sowohl zum Entkernen von Äpfeln als auch zum Schälen eignet. Diese bekannte Vorrichtung ist in der Art eines Taschenmessers aufgebaut, bei dem ein Schälmesser nach Bedarf herausklappbar ist. Die Konstruktion dieser Vorrichtung ist daher relativ aufwendig und als Folge davon auch entsprechend kostenintensiv.

Der vorliegenden Erfindung liegt daher die Aufgabe zugrunde, eine einfache und kostengünstige Vorrichtung zum Entkernen von Äpfeln oder dergleichen anzugeben, wobei gleichzeitig die Möglichkeit zum Schälen besteht.

Diese Aufgabe wird durch die kennzeichnenden Merkmale von Anspruch 1 gelöst. Weitere Ausgestaltungen der Erfindung sowie eine Verwendung sind in weiteren Ansprüchen angegeben.

Die Erfindung weist die folgenden Vorteile auf: Indem das mindestens eine U-förmige Ausstechelement mindestens eine Schnittkante aufweist, welche im Wesentlichen axial in Bezug auf das Ausstechelement verläuft, ist eine Vorrichtung geschaffen, die ohne jegliches Verstellen, Drehen, Verschieben oder Betätigen von besonderen Mechanismen zum einfachen Entkernen von Äpfeln, Schälen der Haut, Schneiden und Ausstechen von Faulstellen geeignet ist. So lässt sich die erfindungsgemässe Vorrichtung auch durch behinderte Personen bequem einhändig verwenden.

Ferner eröffnet die erfindungsgemässe Vorrichtung die Möglichkeit, alle Vorgänge beim Entkernen und Schälen eines Apfels durchzuführen, ohne dass ein Handwechsel oder komplizierte Einstellungsvorgänge an der Vorrichtung selbst erforderlich sind. So wird mit der einen Hand ein Apfel gehalten, während mit der anderen Hand ohne Unterbrechung alle Funktionen leicht ausgeführt werden. Dabei ist kein Verstellen, Schieben oder Ziehen einzelner Vorrichtungsteile erforderlich, um die erfindungsgemässe Vorrichtung für einen anderen Vorgang vorzubereiten. Durch die Erfindung ist somit ein einfach handhabbares Küchengerät für mehrere unterschiedliche Arbeitsgänge geschaffen worden, zwischen denen ohne weiteres und ohne Betätigung von Umschaltvorgängen gewechselt werden kann.

Darüber hinaus ist die erfindungsgemässe Vorrichtung sehr einfach aufgebaut, was eine Massenproduktion mit wenigen Herstellungsvorgängen ermöglicht. Eine kostengünstige Herstellung ist aber nicht nur bei hohen Stückzahlen möglich; auch bei kleinen Stückzahlen können die Herstellungskosten aufgrund des einfachen Aufbaus der erfindungsgemässen Vorrichtung tief gehalten werden.

Die Erfindung wird nachfolgend anhand von Zeichnungen beispielsweise erläutert. Dabei zeigen:
- Fig. 1,: in perspektivischer Darstellung, eine erste erfindungsgemässe Ausführungsform mit zwei, über ein Federelement verbundenen Ausstechelementen in entspannter Stellung,
- Fig. 2: die Ausführungsform gemäss Fig. 1 in vorgespannter Stellung der Ausstechelemente wiederum in perspektivischer Darstellung,
- Fig. 3: die Ausführungsform gemäss Fig. 2 in einer Seitenansicht,
- Fig. 4: einen Schnitt durch die erste Ausführungsform gemäss einer in Fig. 3 angegebenen Schnittebene A-A,
- Fig. 5: einen Schnitt durch die erste Ausführungsform gemäss einer in Fig. 3 angegebenen Schnittebene B-B,
- Fig. 6,: in perspektivischer Darstellung, eine zweite Ausführungsform der Erfindung, welche ebenfalls zwei Ausstechelemente aufweist,
- Fig. 7: die zweite Ausführungsform gemäss Fig. 6 in einer Seitenansicht und
- Fig. 8,: in perspektivischer Darstellung, eine dritte Ausführungsform der Erfindung mit einem einzelnen Ausstechelement.

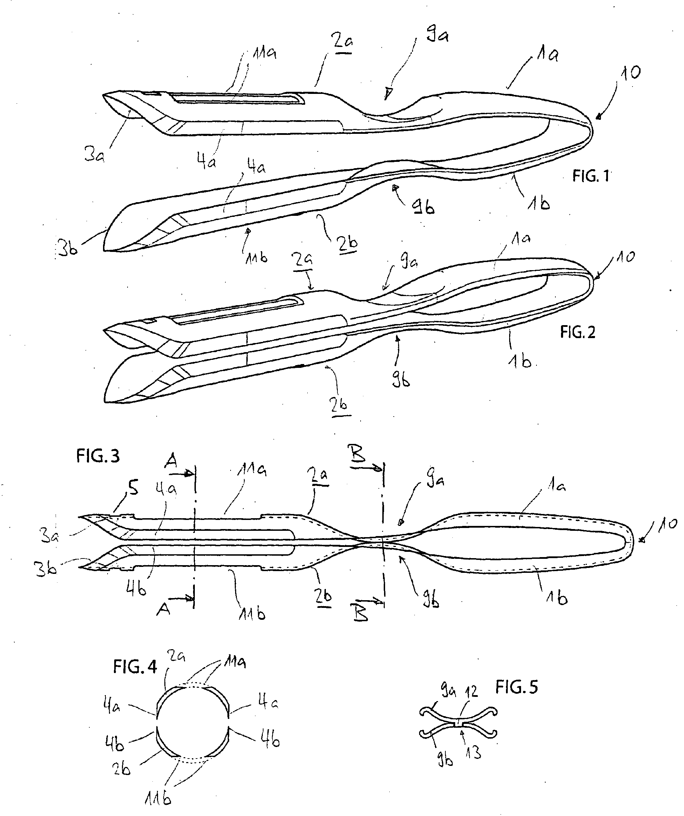

Fig. 1 zeigt eine erste Ausführungsform der erfindungsgemässen Vorrichtung in einer perspektivischen Darstellung, wobei die Vorrichtung aus zwei Handgriffen 1a und 1b bzw. Handgriffhälften 1a und 1b, einem die Handgriffe 1a und 1b verbindenden Federelement 10 und zwei Ausstechelemente 2a und 2b besteht. Je ein Ausstechelement 2a bzw. 2b ist mit einem der Handgriffe 1a bzw. 1b über je ein Abgleitschutzelement 9a bzw. 9b verbunden, und jedes Ausstechelement 2a bzw. 2b weist je eine in einem Spitz endenden Schneidevorrichtung 3a bzw. 3b am in Bezug auf die Handgriffe 1a bzw. 1b gegenüberliegenden Ende auf. Ausgehend vom jeweiligen Abgleitschutzelement 9a bzw. 9b, in Richtung Schneidevorrichtung 3a bzw. 3b schreitend, sind erfindungsgemässe Schnittkanten 4a und 4b bzw. 11a und 11b vorgesehen, wobei die Schnittkanten 11a und 11b herkömmliche Schälerklingen und die Schnittkanten 4a und 4b herkömmliche Messerklingen bilden.

Die beiden U-förmigen Ausstechelemente 2a und 2b bilden durch Zusammendrücken der beiden Handgriffhälften 1a und 1b einen zylinderförmigen Körper, wie dies aus Fig. 2 ersichtlich ist. Durch das Zusammendrücken der beiden Handgriffhälften 1a und 1b wird das Federelement 10 vorgespannt, wobei eine Vorspannbewegung durch ein Zusammentreffen der muldenförmig ausgebildeten Abgleitschutzelemente 9a und 9b begrenzt wird. Dabei wird vorzugsweise die Muldenform der Abgleitschutzelemente 9a und 9b derart gewählt, dass sich die Schnittkanten 4a und 4b gerade nicht berühren.

In der in Fig. 2 gezeigten Stellung eignet sich die erfindungsgemässe Vorrichtung insbesondere zum Ausstechen eines Apfelkerns, wobei dann die erfindungsgemässe Vorrichtung durch den Kernbereich des auszustechenden Apfels gestossen wird. Nach dem Durchstechen des Apfels wird die erfindungsgemässe Vorrichtung im Apfel gedreht, um den Kern komplett vom Apfel zu trennen. Anschliessend wird die erfindungsgemässe Vorrichtung aus dem Apfel gezogen. Durch eine anschliessende Reduktion der auf die Griffhälften 1a und 1b einwirkende Presskraft werden die beiden Ausstechelemente 2a und 2b durch das vorgespannte Federelement 10 voneinander beabstandet und der aus dem Apfel herausgeschnittene Kernbereich wird automatisch ausgeworfen.

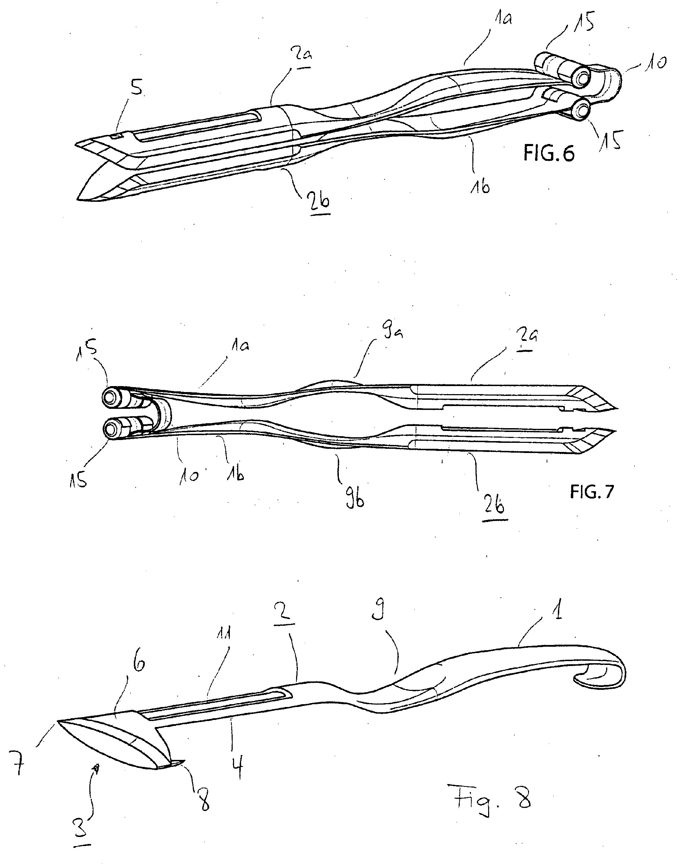

Da durch das Drehen der erfindungsgemässen Vorrichtung ein im Apfel entstehender Widerstand die beiden Ausstechelemente 2a und 2b allenfalls seitlich verschiebt bzw. verdreht, besteht die Gefahr, dass ein Apfel in zwei Hälften gesprengt wird. Um dies zu verhindern, ist in einer weiteren Ausführungsform der Erfindung vorgesehen, die beiden Ausstechelemente 2a und 2b im zusammengedrückten Zustand durch eine Fixiervorrichtung zu fixieren. Eine solche Fixiervorrichtung zeigt Fig. 5, die einen Schnitt durch die in Fig. 3 gezeigte erfindungsgemässe Vorrichtung entlang der Schnittebene B-B (Fig. 3) darstellt. Aus Fig. 5 ist ersichtlich, dass ein Nocken 12 des Abgleitschutzelementes 9a in eine Ausnehmung 13 des Abgleitschutzelementes 9b eingreift, wenn die beiden Griffhälften 1a und 1b vollständig gegeneinander gepresst werden. Damit sind die beiden Griffhälften 1a und 1b und damit die beiden Ausstechelemente 2a und 2b in dieser Position einerseits durch die feste Verbindung über das Federelement 10 und anderseits durch diese Fixiervorrichtung, bestehend aus Nocken 12 und Ausnehmung 13, vollständig fixiert, womit ein seitliches Abgleiten während dem Ausstechvorgang nicht möglich ist.

Bei der Konstruktion der in den Fig. 1 bis 7 dargestellten Ausführungsvarianten der erfindungsgemässen Vorrichtung wurde des weiteren darauf geachtet, dass sich die Griffhälften 1a und 1b bzw. die Abgleitschutzelemente 9a und 9b im zusammengedrückten Zustand in der Mitte, d.h. im Innern, kontaktieren. Damit wird verhindert, dass beim Zusammendrücken die Haut von seitlich anliegenden Fingern eines Benutzers eingeklemmt wird.

In Fig. 4 ist eine weitere Ausführungsvariante für eine erfindungsgemässe Vorrichtung mit zwei Ausstechelementen 2a und 2b dargestellt. Es handelt sich dabei um eine Querschnittdarstellung entlang einer Schnittebene A-A gemäss Fig. 3. Wiederum sind mit 2a und 2b die Ausstechelemente bezeichnet. Erkennbar sind auch die Schnittkanten 4a und 4b sowie die die Schälklingen bildenden Schnittkanten 11a und 11b, wobei bei den letzteren ein Unterschied zwischen der Öffnungsbreite im jeweiligen Ausstechelement 2a bzw. 2b besteht, womit eine unterschiedliche Schälstärke der Ausstechelemente 2a bzw. 2b erreicht wird. So kann zum Beispiel bei sauberen Oberflächen die kleine Schälstärke gewählt werden, um nur eine dünne Schicht zu schälen, anderseits kann die grosse Schälstärke für grobe und verschmutzte Oberflächen gewählt werden, um eine entsprechende dicke Schicht zu entfernen.

In den Fig. 6 und 7 ist eine weitere Ausführungsvariante der erfindungsgemässen Vorrichtung dargestellt, wobei bei dieser das Federelement 10 je mit einem Scharnier 15 mit den jeweiligen Handgriffhälften 1a bzw. 1b verbunden ist. Damit ist die Möglichkeit geschaffen, dass die die Schälklingen bildenden Schnittkanten 11a bzw. 11b nicht nur nach Aussen wirken, wie dies in Fig. 6 dargestellt ist, sondern durch vollständiges Umklappen der Ausstechelemente 2a und 2b auch nach Innen wirken, wie dies aus Fig. 7 ersichtlich ist. Damit eignet sich diese Ausführungsvariante der Erfindung insbesondere als doppelseitiger Schäler zum Schälen von Spargeln, Karotten, Gurken, Zucchini, etc. Beim Umklappen der Ausstechelemente 2a, 2b je um 180° wird eine Federwirkung im Scharnier 15 erzielt, so dass auch in dieser Position beim Loslassen die Ausstechelemente 2a, 2b auseinander gedrückt werden. Damit wird ermöglicht, dass sich die beiden zusammengedrückten Ausstechelemente 2a, 2b nach dem Schälen automatisch öffnen und somit die erfindungsgemässe Vorrichtung zum Weiterschälen ohne Aufwand bequem an die Schälanfangsposition zurückgeführt werden kann.

Es ist vorgesehen, jedoch nicht zwingend, dass die Ausstechelemente 2a und 2b und die Handgriffhälften 1a und 1b aus einem Stück Metall gefertigt sind. Denkbar ist jedoch auch, dass, insbesondere für ein aufwendigeres bzw. exklusiveres Produkt, die Handgriffhälften 1a und 1b separat in Kunststoff oder Metall gefertigt sind.

Indem in beiden Ausstechelementen 2a und 2b Schnittkanten 11a und 11b zur Bildung von Schälklingen vorhanden sind, kann die erfindungsgemässe Vorrichtung durch Wenden mühelos weiterverwendet werden, wenn beispielsweise eine der Schälklingen verunreinigt worden ist, und zwar sowohl für Links- als auch für Rechtshänder. Die in einen Spitz auslaufenden Schnittkanten am Ende des Ausstechelementes 2a bzw. 2b können Faulstellen auf einfache Art und Weise entfernt werden. Die scharfen, seitlichen Schnittkanten 4a und 4b dienen zum Wegschneiden von grösseren Stücken und Stellen.

Die erfindungsgemässe Vorrichtung ermöglicht erstmals ohne jegliche mechanische Verschiebung oder zusätzlichen Montageteile folgende Arbeitsgänge:
- Apfelkernentfernung;
- einfacher, automatischer Auswurf des Apfelkerns bei Entlastung der Handgriffhälften 1a und 1b;
- Schälen von Früchten und Gemüse mit zwei unterschiedlichen Schälstärken mit den Schälklingen gebildet durch die Schnittkanten 11a und 11b;
- Ausstechen von Faulstellen mit Hilfe der in einen Spitz auslaufenden Schnittkanten 4a und 4b;
- Wegschneiden von grösseren Stücken durch die seitlich angeordneten Schnittkanten 4a und 4b.

Zusammengefasst ergeben sich für die in den Fig. 1 bis 7 dargestellten Ausführungsformen die folgenden Vorteile:
- Die scharfen, abgeschrägten Spitzen der Schneidevorrichtungen 3a und 3b, die in die seitlichen, scharfen Schnittkanten 4a und 4b münden, ermöglichen einen einfachen Einstich in den Apfel, um sodann den Apfelkern mit einer leichten Drehbewegung zu entfernen.
- Beim Herausziehen verhindern kleine Einkerbungen 5 in den Schneidevorrichtungen 3, dass der Apfelkern nicht entgleitet und herausgezogen werden kann.
- Einfacher Auswurf des Apfelkerns beim Loslassen der Handgriffhälften 1a und 1b, ohne dabei die Finger zu gebrauchen, zu verschmutzen oder zu verletzen. Die Federspannung des Federelementes 10 drückt die beiden Ausstechelemente 2a und 2b automatisch in den offenen, ursprünglichen Zustand (Fig. 1) zurück.
- Einfaches Schälen von allen schälbaren Früchten und Gemüse für Links- und Rechtshänder.
- Indem auf beiden Seiten der erfindungsgemässen Vorrichtung unterschiedliche Schnittstärken vorgesehen werden, kann die eine Seite zum Schälen von sauberen, feinen Oberflächen und die andere Seite für grobe, verschmutzte Oberflächen verwendet werden.
- Mit den beiden scharfen Schneidevorrichtungen 3 ist das Ausstechen von Faulstellen leicht und einfach.
- Die scharfen, seitlichen Schnittkanten 4a und 4b können anstelle eines Messers zum Wegschneiden von grösseren Stücken bzw. Stellen verwendet werden.
- Durch eine Erhebung/Vertiefung oder Wölbung am Klingenanfang (Abgleitschutzelement 9a und 9b) wird beim Handgriff ein Abgleiten der Hand verhindert und das Gerät liegt sicher in den Händen.
- Doppelseitiges Schälen von Spargeln, Karotten, Gurken, Zucchini, etc. bei der Ausführungsvariante gemäss Fig. 6 bzw. 7.

In Fig. 8 ist eine weitere Ausführungsform der erfindungsgemässen Vorrichtung dargestellt. Im Unterschied zu den in den Fig. 1 bis 7 gezeigten Ausführungsformen weist die in Fig. 8 gezeigte Variante lediglich ein Ausstechelement 2 auf. Dafür ist die Schneidevorrichtung 3 am in Bezug auf den Handgriff 1 gegenüberliegenden Ende als Hülse 6 mit einer umlaufenden Schnittkante 3 ausgebildet, wobei die Hülse 6 mit der Schnittkante 3 in einen Spitz 7 auslaufen. Die übrige Ausgestaltung dieser Ausführungsform sind im wesentlichen gleich wie bei der Ausführungsform mit zwei Ausstechelementen, insbesondere sind die durch zwei Schnittkanten 11 gebildete Schälklinge, das Abgleitschutzelement 9 und der Handgriff 1 analog ausgebildet.

Das Ausstechelement 2, das Abgleitschutzelement 9, die Hülse 6, die Schnittkanten 11 und der Handgriff 1 sind vorzugsweise aus einem Teil und aus Metall gefertigt. Die scharfe Spitze 7 am Ende der Hülse 6 dient zusätzlich zur Entfernung von Faulstellen. Die scharfen, seitlichen Schneideflächen 4 dienen zum Wegschneiden von grösseren Stücken und Stellen. Der kleine, scharfe Zahn 8 an der hinteren Seite Hülse 6 dient zum Anschneiden von Früchteund Gemüseschalen. So kann nachträglich leicht von Hand die Schalen vom Fruchtfleisch entfernt werden.

Durch die ergonomische Formgebung ist die erfindungsgemässe Vorrichtung angenehm in der Handhabung, stabil im Griff und bietet zusätzlich einen Abgleitschutz für Daumen und Zeigefinger durch das Abgleitschutzelement 9.

Die erfindungsgemässe Vorrichtung ermöglicht ohne jegliche mechanische Verschiebung oder zusätzlichen Montageteile folgende Arbeitsgänge:
- Einfache einhändige Apfelkernentfernung von Hand;
- Schälen von Früchten und Gemüse mit integrierter Schälklinge;
- Ausstechen von Faulstellen;
- Wegschneiden von grösseren Stücken durch seitliche Schnittkanten 4;
- Anschneiden von Früchte- und Gemüseschalen mit Hilfe der Spitze 8 zum nachfolgend einfachen Schälen von Hand.

Im Folgenden sind die Vorzüge der erfindungsgemässen Vorrichtung gemäss Fig. 8 nochmals zusammengefasst dargestellt:
- Die scharfe, abgeschrägte Hülse 6 am Ende des Ausstechelementes 2 erlaubt ein einfaches Einstechen in den Apfel, um den Kern zu entfernen;
- Da die abgeschrägte Hülse 6 des Ausstechelementes 2 weniger Reibungsfläche aufweist, kann der Kern einfach mit Hilfe des Daumens aus der Hülse 6 entfernt werden;
- Einfaches Schälen von allen schälbaren Früchten und Gemüse für Links- und Rechtshänder;
- Durch eine Erhebung/Vertiefung oder Wölbung am Klingenanfang ist beim Griff ein Abgleitschutz gewährleistet (Abgleitschutzelement 9) und die erfindungsgemässe Vorrichtung liegt sicher in den Händen;
- Mit der scharfen Spitze 7 ist das Ausstechen von Faulstellen leicht und einfach;
- Wegschneiden von grösseren Stücken durch seitliche Schnittkanten 4;
- Zahn 8 zum Anschneiden von Früchte- und Gemüseschalen (wie z.B. bei Zitrusfrüchten, Mangos,...) zum leichteren Einleiten eines manuellen Schälvorganges.

## Patentansprüche

1. Vorrichtung mit einem Handgriff (1a, 1b; 1) und mit mindestens einem länglichen U-förmigen Ausstechelement (2a, 2b; 2), das am einen stirnseitigen Ende mit dem Handgriff (1a, 1b; 1) verbunden ist bzw. in diesen übergeht und das am anderen stirnseitigen Ende eine im wesentlichen in axialer Richtung des Ausstechelementes (2a, 2b; 2) wirkende Schneidevorrichtung (3a, 3b; 3) aufweist, **dadurch gekennzeichnet, dass** das mindestens eine U-förmige Ausstechelement (2a, 2b; 2) mindestens eine Schnittkante (4a, 4b, 11a, 11b; 4, 11) aufweist, welche im wesentlichen axial in Bezug auf das Ausstechelement (2a, 2b; 2) verläuft.

2. Vorrichtung nach Anspruch 1, **dadurch gekennzeichnet, dass** im mindestens einen Ausstechelement (2a, 2b; 2) eine Aussparung vorgesehen ist, wobei mindestens eine im wesentlichen axial verlaufende Kante der Aussparung als Schnittkante (11a, 11b; 11) ausgebildet ist.

3. Vorrichtung nach Anspruch 1 oder 2, **dadurch gekennzeichnet, dass** mindestens eine der axial verlaufenden Kanten des Ausstechelementes (2a, 2b; 2) als Schnittkanten (4a, 4b; 4) ausgebildet sind.

4. Vorrichtung nach einem der Ansprüche 1 bis 3, **dadurch gekennzeichnet, dass** die Schneidevorrichtung (3a, 3b; 3) als Hülse (6) mit stirnseitig angeordneten Schnittkanten (3) ausgebildet ist, wobei die Längsachse der Hülse (6) im wesentlichen mit der Längsachse des Ausstechelementes (2) übereinstimmt.

5. Vorrichtung nach Anspruch 4, **dadurch gekennzeichnet, dass** die Schnittkante (3) in einer Ebene liegt, die in Bezug auf die Längsachse der Hülse (6) schräg verläuft.

6. Vorrichtung nach einem der Ansprüche 1 bis 3, **dadurch gekennzeichnet, dass** zwei, einen Hohlzylinder-förmigen Körper bildende Ausstechelemente (2a, 2b) vorgesehen sind, die in einem Bereich des Handgriffes (1a, 1b) über Verbindungsmittel (10, 15) miteinander verbunden sind.

7. Vorrichtung nach Anspruch 6, **dadurch gekennzeichnet, dass** die Verbindungsmittel (10, 15) in Form eines Federelementes (10) realisiert sind, wobei einem entspannten Zustand des Federelementes (10) die Ausstechelemente (2a, 2b) beabstandet sind.

8. Vorrichtung nach Anspruch 6 oder 7, **dadurch gekennzeichnet, dass** eine Fixiervorrichtung (12, 13) mögliche Positionen der beiden Ausstechelemente (2a, 2b) zueinander vorgibt.

9. Vorrichtung nach Anspruch 6, **dadurch gekennzeichnet, dass** die Verbindungsmittel (10, 15) in Form mindestens eines Scharniers (15) realisiert sind.

10. Vorrichtung nach einem der Ansprüche 1 bis 8, **dadurch gekennzeichnet, dass** sie aus einem einzigen Werkstück herstellbar ist.

11. Verwendung der Vorrichtung nach einem der vorangehenden Ansprüche zum Schälen und/oder Ausstechen von Äpfeln oder dergleichen.
